# EUROPÄISCHE PATENTSCHRIFT

(11) **EP 0 624 485 B1**
(45) Veröffentlichungstag und Bekanntmachung des Hinweises auf die Patenterteilung: **11.12.1996**
(21) Anmeldenummer: 94106611.0
(22) Anmeldetag: 27.04.1994
(51) Int. Cl.: B60B 33/02

(54) **Lenkrolle mit Nachlauffeststeller**
Castor with locking of swiveling rotation
Roulette pivotante avec blocage du pivotement et de la rotation

(30) Priorität: 13.05.1993 DE 9307313 U
(43) Veröffentlichungstag der Anmeldung: 17.11.1994
(73) Patentinhaber: HEINRICH BLICKLE GmbH & Co.KG, D-72348 Rosenfeld (DE)
(72) Erfinder: Maurer, Albrecht, Dipl.-Ing.(FH), D-72336 Balingen (DE)
(74) Vertreter: Säger, Manfred, Dipl.-Ing.

(56) Entgegenhaltungen:
- DE-A- 2 459 580
- DE-A- 2 821 157
- DE-A- 3 546 043
- DE-A- 3 917 291

## Beschreibung

Die vorliegende Erfindung betrifft eine Lenkrolle mit Nachlauffeststeller gemäß dem Oberbegriff des Hauptanspruchs.

Eine gattungsgemäße Lenkrolle mit Nachlauffeststeller ist bekannt (DE-39 17 291). Diese Lenkrolle hat den Nachteil, daß die Feststellbetätigungsfläche und die Losbetätigungsfläche, die mit dem Fuß betätigt werden, dann schwierig erreichbar sind, wenn der zu rollende Gegenstand; an dem die Rolle montiert ist, den Betätigungsbereich dieser Betätigungsflächen überdeckt.

Aufgabe der vorliegenden Erfindung ist es, eine Lenkrolle zu schaffen, bei der die Fußbetätigung auch dann leicht möglich ist, wenn die Betätigungsfläche oben überdeckt ist. Dies Ziel soll mit einer möglichst einfachen Konstruktion der Betätigungsfläche und des für die Wirkung erforderlichen Kipphebels erreicht werden.

Gelöst wird diese Aufgabe bei einer gattungsgemäßen Lenkrolle gemaß dem Oberbegriff des Hauptanspruchs erfindungsgemäß durch dessen Merkmale in, Kennzeichen. Die Unteransprüche geben bevorzugte Ausgestaltungen der Erfindung wieder.

Der Spreizknebel dient dazu, den Kipphebel, der sowohl eine Bremsfläche zur Blockierung der Drehbeweglichkeit des Laufrades als auch Verzahnungen zur Blockierung der Schwenkbeweglichkeit in Eingriff bringt, zu betätigen. Zu diesem Zweck wird der Spreizknebel aus einer Losposition durch Betätigung mit dem Fuß in eine Feststellposition gebracht, wobei der Kipphebel gegenüber dem Laufradgehäuse bzw. der damit verbundenen Gabelrückenverlängerung gekippt wird. Zu diesem Zweck ist der Spreizknebel an dem Ende, an dem sich die Losbetätigungstrittfläche befindet, zweifach so abgewinkelt, daß ein um annähernd zwei rechte Winkel abgewinkelter Steg entsteht, wobei die beiden annähernden rechten Winkel in der Losposition in Richtung von der Laufradachse weg angeordnet sind. Durch eine solche zweifache Abwinkelung wird erreicht, daß in der Feststellposition die obere Kante des Spreizknebels von der Oberkante des Rollengehäuses einen bestimmten vertikalen Abstand V2 aufweist. Dieser vertikale Abstand V2 ist in der Praxis in dem Fall, daß der Trittbereich des Spreizknebels durch die Unterkante des zu rollenden Gegenstandes überdeckt wird, gleich dem durch den zu betätigenden Fuß freien Abstand von der Oberkante des Rollengehäuses. Dieser Abstand V2 entspricht dem vertikalen Abstand V1 in der Losposition, der durch den Abstand des oberen Randes der Feststellbetätigungsfläche, das heißt des von der Radachse weggewandten Randes der Feststellbetätigungsfläche, von der Oberkante des Rollengehäuses entspricht. Durch die zweifache Abwinklung ragt weiterhin der doppelt abgewinkelte Teil des Stegs 1 des Spreizknebels 2 in der Feststellposition um einen Abstand H über die äußere Endbegrenzungskante der Gabelrückenverlängerung hinaus, das heißt über die von der Radachse weggewandte Kante der gesamten Lenkrolleneinrichtung. Durch diese Abstände sind sowohl die Feststellbetätigungsfläche als auch die Losbetätigungsfläche in beiden Positionen; der Feststellposition sowie der Losposition, leicht mit dem Fuß bzw. der Fußspitze erreichbar, so daß die Betätigung des Feststellers mittels Fußbetätigung sowohl zum Feststellen als auch zum Lösen sehr vereinfacht ist.

Die Abstände V1, V2 und H liegen bevorzugt in folgenden Größenbereichen:
- V1 V2:: etwa 15 - 100 mm, insbesondere ca. 40 mm
- H :: etwa 5 - 30 mm, insbesondere ca. 10 mm

Der Kipphebel weist an seinem dem Spreizknebel gegenüberliegenden Ende Kipphebelverzahnungen auf, die in Verzahnungen der auf dem Köngigsbolzen radial und axial fixierten Kugelscheibe des Lenkwälzlagers eingreifen, mit welchem die Lenkgabel über den Königsbolzen am Rollengehäuse befestigt ist. Diese Verzahnungen der Kugelscheibe verlaufen radial zur Achse des Königsbolzens.

Der Kipphebel weist in seinem mittigen Befestigungsbereich ein mittig angeordnetes Auge auf, das mit einer Durchgangsbohrung zur Befestigung des Kipphebels an der Gabelrückenverlängerung dient. Der Kipphebel wird mittels eines Bolzens, der durch die Durchgangsbohrung geführt wird, an der Gabelrückenverlängerung befestigt. Das Auge ist über quer zur Längserstreckung des Kipphebels sich erstreckende Verbindungsstege mit L-förmigen Seitenstegen des Kipphebels verbunden. Zur Erzeugung einer Vorspannung werden die Verbindungsstege wie folgt drehfederartig vorgespannt:

Der nachlaufseitige Kipparm des Kipphebels ist gegenüber der Anlageebene des Befestigungsauges um einen Winkel abgebogen. Durch die Abstützung des nachlaufseitigen Kipparmes seiner Widerlagermulde an der unteren Schulterkante des Spreizknebels entsteht beim Festziehen der Befestigungsmutter eine Vergrößerung des Winkels durch Torsion der Verbindungsstege.

Die Befestigung des Kipphebels an der Gabelrückenverlängerung kann beispielsweise über Anschweißgewindebolzen erfolgen, die an der Gabelrückenverlängerung befestigt werden.

Die Erfindung wird nachfolgend anhand der Figurenbeschreibung beispielhaft näher erläutert . Hierin zeigt:

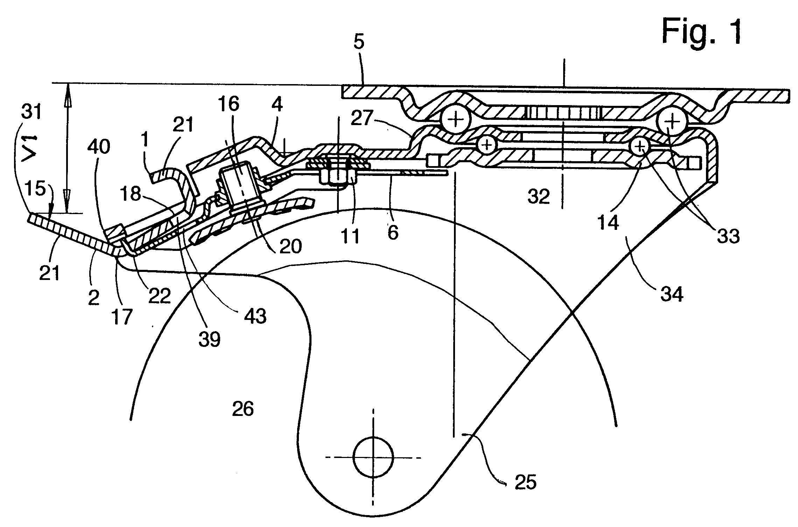

- Figur 1: eine Seitenansicht der Lenkrolle mit teilweisem Vertikalschnitt in der Losposition;

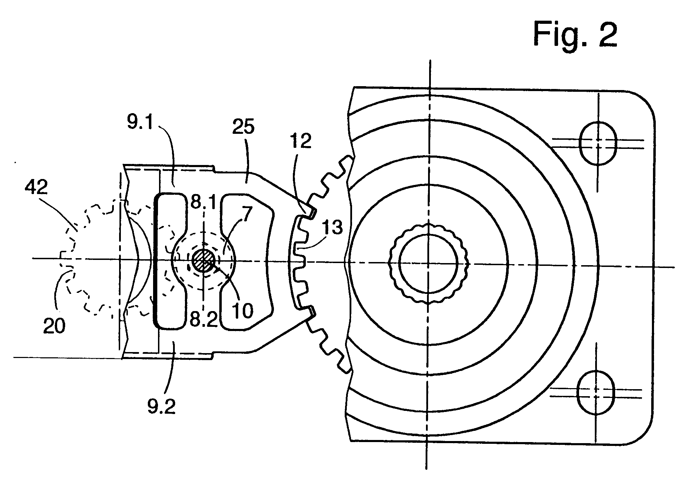

- Figur 2: eine Draufsicht auf die gleiche Lenkrolle mit teilweise weggeschnittenem Laufradgehäuse;

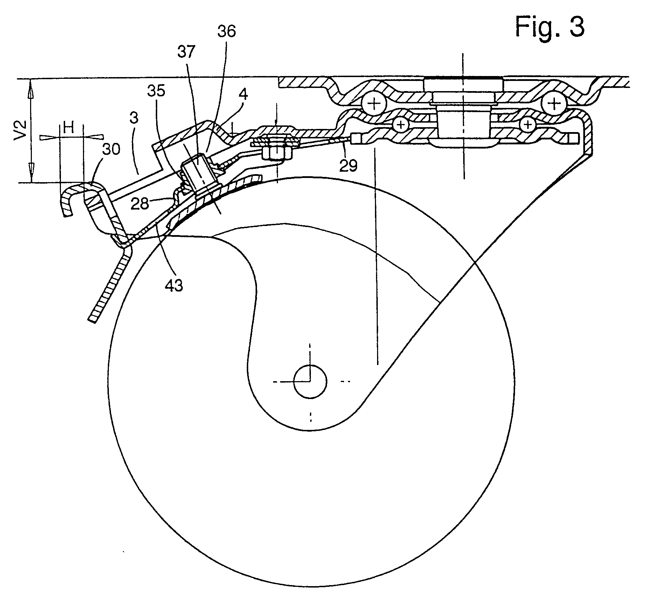

- Figur 3: die gleiche Ansicht wie in Figur 1 in der Feststellposition.

Die Lenkrolle weist ein Rollengehäuse auf, dessen Bodenplatte mit der Oberfläche 5 an dem zu rollenden Gegenstand befestigt wird. Mit dem Rollengehäuse ist über ein Lenkwälzlager 33 über einen Königsbolzen 32 eine Laufradgabel 34 schwenkbar gelagert, in der mit einer Achse ein Laufrad 26 befestigt ist. Ausgehend vom Lenkwälzlager setzt sich die Laufradgabel in Nachlaufrichtung in eine Gabelrückenverlängerung 4 fort, die das gesamte Laufrad 26 überdeckt. An der Gabelrückenverlängerung 4 ist vermittels eines Anschweißgewindebolzens 10 und einer Mutter 11 ein Kipphebel 6 befestigt. Der aus zwei Armen, einem nachlaufseitigen Kipparm 28 und einem wälzlagerseitigen Kipparm 29 besteht.

Der wälzlagerseitige Kipparm 29 weist an seinem Ende Kipphebelverzahnungen 12 auf, die in der Feststellposition in Verzahnungen 13 in eine Kugelscheibe 14, des Lenkwälzlagers 33 eingreifen.

Der nachlaufseitige Kipparm 28 trägt in einer darin eingepreßten Gewindebuchse eine Bremsschraube 16 mit einer laufradseitigen Bremsfläche 20, die in Feststellposition auf die Lauffläche des Loufrades 26 drückt. Die Bremsfläche weist an ihrer äußeren Umfangskante einen Zahnkranz 42 auf, der zum Nachstellen der Bremsschraube dienen kann, wie später noch erläutert wird.

Zwischen dem nachlaufseitigem Kipparm 28 und der Gabelrückenverlängerung 4 ist im Bereich des nachlaufseitigen Endes des Kipparms 28 ein Spreizknebel 2 angebracht, der im oberen Bereich seiner Länge einen doppelt in etwa rechtwinklig abgewinkelten Steg 1 aufweist, der als Lösebetätigungsfläche durch einen Längsschlitz 3 in der Gabelrückenverlängerung übersteht. Der Spreizknebel 2 ist in einem Längsschlitz 3 der Gabelrückenverlängerung 4 seitlich geführt. Außerdem weist der Spreizknebel 2 eine untere Schulter 17 und eine obere durch den Steg 1 geteilte Schulter 18 auf. Über die untere Schulter 17 ragt eine Feststellbetätigungsfläche 15 hinaus, während am anderen Ende eine Losbetätigungsfläche 21 angeformt ist. Die untere Schulter 17 wird in Widerlagermulden 22 des nachlaufseitigen Kipparmes 28 aufgenommen, während die obere Schulter 18 an der Unterseite der Gabelrückenverlängerung 4 anliegt. In der Losposition liegt eine zwischen den beiden rechtwinkligen Abwinklungen des Steges 1 befindliche Fläche flach an einer Gegenfläche der Gabelrückenverlängerung 4 an.

Zum Einstellen der Feststellposition wird die Feststellbetätigungsfläche 15 durch Fußbetätigung des Spreizknebels 2 in Richtung zur Achse des Laufrades 26 gedrückt und schwenkt dabei in der Widerlagermulde 22 um einen Winkel von etwa 90°. Dabei wird der Kipphebel in Richtung zum Laufrad 26 gedrückt und die Bremsfläche 20 kommt mit dem Laufrad in Eingriff. Außerdem wird der wälzlagerseitige Kipparm 29 mit seinen Verzahnungen 12 in die Verzahnungen 13 an dem Lenkwälzlager in Eingriff gebracht.

Zum Überführen in die Losposition wird die Losbetätigungstrittfläche 21 durch Fußbetätigung in Richtung zum Königsbolzen 32 bzw. zum Lenkwälzlager 33 gedrückt und schwenkt dabei um etwa 90° zurück. Durch die Vorspannung des Kipphebels 6 wird der nachlaufseitige Kipparm 28 in Richtung vom Laufrad weg bewegt, so daß die Bremsfläche 20 außer Eingriff mit dem Laufrad 26 tritt. Gleichzeitig tritt auch die Kipphebelverzahnung 12 außer Eingriff mit der Verzahnung 13 an der Kugelscheibe 14.

## Patentansprüche

1. Lenkrolle mit einer Laufradgabel (34), die zwischen ihren Gabelschenkeln (25) ein Laufrad (26) aufnimmt, mit einer Feststelleinrichtung auf der Nachlaufseite zum Blockieren der Drehbeweglichkeit des Laufrades (26) und der Schwenkbeweglichkeit der Laufradgabel (34), die mit ihrem Gabelrücken (27) mittels eines lotrecht zur Achse des Laufrads (26) verlaufenden Königsbolzens (32) und von diesem gehaltener Lenk-Wälzlager (33) um die Achse des Königsbolzens (32) schwenkbar ist, wobei die Feststellenrichtung in Form eines zweiarmigen, über dem Laufrad (26) am Gabelrücken (27) kippbar gelagerten, federnden oder federbeaufschlagtem Kipphebel (6), der sich mit einem nachlaufseitigen Kipparm (28) oberhalb des Laufrades (26) und unter einer nachlaufseitig angeordneten Gabelrückenverlängerung (4); mit einem wälzlagerseitigen Kipparm (29) oberhalb des Laufrades (26) bis zum Lenkwälzlager (33) erstreckt und mittels eines Spreizknebels (2), der auf seiner Länge mit einem Steg (1) durch einen Längsschlitz (3) der Gabelrückenverlängerung (4) verläuft, gegen seine Federung in eine Feststellposition kippbar und bei Übertotpunktstellung des Spreizknebels (2) arretierbar ist, wobei der Kipphebel (6) in Feststellposition an einem Ende in eine Verzahnung (13) der Kugelscheibe des Lenkwälzlagers (33) eingreift und auf der Länge des nachlaufseitigen Kipparms (28) mit einer Bremsfläche (20) auf der Lauffläche des Laufrades (26) anliegt, während der Spreizknebel (2) mit einem Knebelteil mit unteren Schultern (17) in Widerlagermulden (22) am Ende des Kipparms (28) sowie mit oberen Schultern (18) an der Gabelrückenverlängerung (4) anliegend, zwischen letzterer und dem Kipphebel (6) eingeklemmt ist und über der Gabelrückenverlängerung (4) eine Losbetätigungstrittfläche (21) sowie außerhalb der unteren Schultern eine Feststellbetätigungsfläche (15) aufweist,
wobei der Kipphebel (6) im Bereich der Bremsfläche (20) eine nach unten offene, nach oben vorspringende, topfförmige Aufnahmemulde (36) für eine Haltemutter (35) aufweist, welche eine Bremsschraube (37) aufnimmt, die laufradseitig verbreitert und mit der Bremsfläche (20) versehen ist, während die Bremsschraube (37) in Losposition des Kipphebels (6) unter dem Loch (39) liegend durch dieses verstellbar ist,
**dadurch gekennzeichnet,**
daß der Spreizknebel (2) an seiner Losbetätigungstrittfläche (21) zu dem Steg (1) zweifach abgewinkelt ist derart, daß der vertikale Abstand (V2) der oberen Kante (30) des Spreizknebels (2) von der Oberkante (5) des Rollengehäuses in der Feststellposition dem vertikalen Abstand V1 des oberen Randes (31) der Feststellbetätigungsfläche (15) des Spreizknebels (2) in der Losposition entspricht und der abgewinkelte Steg (1) in der Feststellposition um einen Abstand (H) über die äußere Endbegrenzungskante (40) der Gabelrückenverlängerung (4) übersteht.

2. Lenkrolle nach Anspruch 1, dadurch gekennzeichnet, daß der Kipphebel (6) in Feststellposition mit an seinem am wälzlagerseitigen Kipparm (29) befindlichen Ende angeordneten Kipphebelverzahnungen (12) in radial zur Achse des Königsbolzens (32) verlaufenden Verzahnungen (13) der Kugelscheibe (14) des Lenkwälzlagers (33) eingreift.

3. Lenkrolle nach Anspruch 1, dadurch gekennzeichnet, daß der Kipphebel in seinem Befestigungsbereich ein mittig angeordnetes Auge (7) mit einer Durchgangsbohrung (41) zur Befestigung an der Gabelrückenverlängerung (4) aufweist, wobei das Auge (7) über quer zur Längserstreckung des Kipphebels (6) sich erstreckende Verbindungsstege (8.1, 8.2) mit L-förmigen Seitenstegen (9.1, 9.2) des Kipphebels (6) verbunden ist.

4. Lenkrolle nach Anspruch 1 und 3, dadurch gekennzeichnet, daß die Befestigung des Kipphebels (6) über einen Anschweißgewindebolzen (10) und einer Mutter (11) an der Gabelrückenverlängerung (4) erfolgt.

5. Lenkrolle nach Anspruch 1, dadurch gekennzeichnet, daß die Bremsschraube (16) an der Bremsfläche (20) einen Zahnkranz (42) aufweist und durch das Loch (39) im Spreizknebel (2) sowie ein weiteres Loch (43) im Kipparm (28) verstellbar ist.

## Claims

1. A castor having a wheel fork (34) which accommodates a wheel (26) between its fork limbs (25), a locking device on the trailing side for locking the rotational mobility of the wheel (26) and the pivotal mobility of the wheel fork (34) which is pivotable with its fork back portion (27) by means of a kingpin (32) extending perpendicularly to the axis of the wheel (26) and steering rolling bearings (33) held by the kingpin (32), about the axis of the kingpin (32), wherein the locking device in the form of a two-arm, resilient or spring-loaded rocking lever (6) which is mounted rockably above the wheel (26) on the fork back portion (27) and which extends with a rocking arm (28) at the trailing side above the wheel (26) and below a fork back portion extension (4) arranged at the trailing side and with a rocking arm (29) at the rolling bearing side above the wheel (26) to the steering rolling bearing (33) and by means of a spreading toggle (22) which extends over its length with a leg (1) through a longitudinal slot (3) in the fork back portion extension (4) is rockable against its spring action into a locking position and can be arrested in the over dead-centre position of the spreading toggle (2), wherein in the locking position the rocking lever (1) engages at one end into a tooth arrangement (13) of the ball disc of the steering rolling bearing (33) and on the length of the rocking arm (28) at the trailing side bears with a braking surface (20) against the running surface of the wheel (26) while the spreading toggle (2), bearing with a toggle portion with lower shoulders (17) in support recesses (22) at the end of the rocking arm (28) and with upper shoulders (18) against the fork back portion extension (4), is clamped between the latter and the rocking lever (6) and has above the fork back portion extension (4) a release actuation tread surface (21) and outside the lower shoulders a locking actuation surface (15), wherein in the region of the braking surface (20) the rocking lever (6) has a downwardly open, upwardly projecting, cup-shaped receiving recess (36) for a holding nut (35) which accommodates a braking screw (37) which is widened at the side towards the wheel and is provided with the braking surface (20) while the braking screw (37), in the release position of the rocking lever (6), disposed below the hole (39), is displaceable through the latter, characterised in that at its release actuation tread surface (21) the spreading toggle (2) is angled twice to form the leg (1) in such a way that the vertical spacing (V2) of the upper edge (30) of the spreading toggle (2) from the upper edge (5) of the castor housing in the locked position corresponds to the vertical spacing (V1) of the upper edge (31) of the locking actuation surface (15) of the spreading toggle (2) in the release position and the angled leg (1) in the locked position projects by a distance (H) beyond the outer end boundary edge (40) of the fork back portion extension (4).

2. A castor according to claim 1 characterised in that in the locked position the rocking lever (6) engages with rocking lever tooth means (12) arranged at its end which is on the rocking arm (29) at the rolling bearing side into tooth means (13) of the ball disc (14) of the rolling bearing mounting (33), which tooth means (13) extend radially relative to the axis of the kingpin (32).

3. A castor according to claim 1 characterised in that in its fixing region the rocking lever has a centrally arranged eye (7) with a through bore (41) for fixing to the fork back portion extension (4), wherein the eye (7) is connected to L-shaped side legs (9.1, 9.2) of the rocking lever (6) by way of connecting legs (8.1, 8.2) extending transversely relative to the longitudinal extent of the rocking lever (6).

4. A castor according to claims 1 and 3 characterised in that the rocking lever (6) is fixed to the fork back portion extension (4) by way of a welded-on screwthreaded stud (10) and a nut (11).

5. A castor according to claim 1 characterised in that the braking screw (16) has a ring of teeth (42) on the braking surface (20) and is adjustable through the hole (39) in the spreading toggle (2) and a further hole (43) in the rocking arm (28).

## Revendications

1. Roulette comprenant une chape (34) et un galet (26) montée entre les deux branches (25) de la chape, un dispositif de blocage du pivotement et de la rotation de la chape (34) pivotant autour de l'axe du boulon (32) monté, perpendiculairement à l'axe du galet (26), sur le dos (27) de la chape et introduit dans un roulement de guidage (33), le dit dispositif de blocage, réalisé sous la forme d'un levier basculant (6) à deux bras monté, au-dessus du galet (26), sur le dos de chape (27) de façon à pouvoir basculer tout en étant élastique ou appuyé contre un ressort, le bras basculant (28) de ce levier côté pivotement et rotation étant orienté, au-dessus du galet (26) et au-dessous de la prolongation (4) du dos de chape et l'autre bras basculant (29) côté roulement étant orienté au-dessus du galet (26) jusqu'au roulement de guidage (33), ledit levier basculant (6) pouvant être arrêté par un écarteur (2) dont une entretoise (1), vue dans le sens longitudinal, passe par une fente longitudinale (3) aménagée dans la prolongation (4) du dos de chape, après basculement du levier en une position de blocage contre l'effort de son élasticité inhérente ou du ressort d'appui lorsque l'écarteur (2) atteint une position de point mort dans laquelle le levier basculant (6) arrivé en position de blocage s'introduit, avec l'une de ses extrémités, dans le crantage (13) du disque à billes du roulement de guidage (33) tout en s'appuyant, par le côté du bras basculant (28), contre la face de roulement du galet (26) par l'intermédiaire d'une surface de freinage (20), tandis que l'écarteur (2) est coincé, par l'appui, de sa partie comprenant des épaulements inférieurs (17), contre des creux (22) aménagés à l'extrémité du bras pivotant (28) et de sa partie comprenant des épaulements supérieurs (18) contre la prolongation (4) du dos de chape, entre ladite prolongation et le levier basculant (6), ledit levier basculant comprenant également une surface de desserrage (21), ainsi qu'une surface de serrage (15) située à l'extérieur de l'épaulement inférieur,
ledit levier basculant (6) comprenant également, dans la zone de la surface de freinage (20), un logement (36) ouvert vers le bas et en saillie vers le haut en forme de pot pour recevoir un écrou de fixation (35) dans lequel est vissé un boulon de freinage (37) élargi du côté du galet et muni de la surface de freinage (20), tandis que le boulon de freinage (37) peut être ajusté lorsque le levier basculant (6) se trouve en position desserrée dans laquelle ledit boulon se trouve au-dessous du trou (39),
**CARACTERISEE** en ce que l'écarteur (2) est coudé deux fois au niveau de sa surface de desserrage (21) par rapport à l'entretoise (1) de sorte que l'écartement vertical (V2) entre le bord supérieur (30) de l'écarteur (2) et le bord supérieur (5) du boîtier du galet corresponde, en position de serrage, à l'écartement vertical V1 entre le bord supérieur (31) de la surface de blocage (15) de l'écarteur (2) en position desserrée et me bord supérieur (5) du boîtier et en ce que l'entretoise (1) coudée dépasse, en position bloquée, le bord extérieur de délimitation (40) de la prolongation (4) du dos de chape par l'écartement (H).

2. Roulette selon la revendication 1, **caractérisée** en ce que les crantages (12) du levier basculant (6) disposés à l'extrémité du bras basculant (29) côté roulement s'introduisent, en position de blocage, dans des crantages (13) du disque à billes (14) du roulement de guidage (33) et ce, dans le sens radial par rapport à l'axe du boulon (32).

3. Roulette selon la revendication 1, **caractérisée** en ce que le levier basculant comprend, dans sa zone de fixation, un oeil (7) central muni d'un alésage de passage (41) permettant sa fixation à la prolongation (4) du dos de chape, ledit oeil (7) étant relié à des entretoises latérales en forme de L (9.1, 9.2) du levier basculant (6) par des entretoises de liaison (8.1, 8.2) disposées dans le sens transversal par rapport à l'orientation longitudinale du levier basculant (6).

4. Roulette selon les revendications 1 et 3, **caractérisée** en ce que le levier basculant (6) est fixé sur la prolongation (4) du dos de chape par un boulon fileté (10) fixé par soudage et par un écrou (11).

5. Roulette selon la revendication 1, **caractérisée** en ce que le boulon de freinage (16) comprend une couronne dentée (42) au niveau de la surface de freinage (20) et que le trou (39) aménagé dans l'écarteur (2), ainsi qu'un trou supplémentaire (43) aménagé dans le bras basculant (28) sont réglables.
